# EUROPEAN PATENT APPLICATION

(11) **EP 4 478 756 A1**
(43) Date of publication of application: **18.12.2024**
(21) Application number: 23178653.4
(22) Date of filing: 12.06.2023
(51) Int. Cl.: H04W 8/20, H04L 41/00, H04W 8/00, H04W 12/06, H04W 48/16, H04W 88/06, H04L 41/0806, G05B 19/042

(54) **A METHOD FOR ONBOARDING A DEVICE INTO A DATA NETWORK**

(71) Applicant: Siemens Aktiengesellschaft, 80333 München (DE)
(72) Inventor: Frank, Reinhard, 81369 München (DE); Döricht, Volkmar, 80803 München (DE); Zeiger, Florian, 85635 Höhenkirchen-Siegertsbrunn (DE)
(74) Representative: Siemens Patent Attorneys

(57) **Abstract**

The invention refers to a method for onboarding a device (DE) into a data network (DN), comprising the following steps:
a) receiving by an onboarding management module (OM) of a mobile entity (ME) an onboarding job (OJ) and configuration data (CON) for an onboarding of the device (DE) based on the onboarding job (OJ);
b) positioning the mobile entity (ME) next to the device (DE) by the aid of a navigation module (NM) of the mobile entity (ME), where the navigation module (NM) recognizes when the mobile entity (ME) is next to the device (DE);
c) establishing a communication between the onboarding management module (OM) of the mobile entity (ME) and the device (DE) next to it via a communication module (CM) of the mobile entity (ME);
d) performing an onboarding process of the device (DE) into the data network (DN) via the established communication based on the configuration data (CON).

## Description

Onboarding of devices into data networks and particularly into industrial data networks is a well-known challenge. Installing new devices in a data network is time consuming and error-prone due to a high number of manual interventions required. In addition, cross-domain knowledge is necessary to perform the device onboarding task correctly.

Onboarding processes according to the prior art need a pre-configuration of the device to be onboarded. Particularly, security information needs to be stored in the device in order relate the device to the data network into which the device shall be onboarded. This pre-configuration is often caried out manually. E.g., a user moves to the device to be onboarded and stores thereon corresponding configuration data, e.g. by transmitting the configuration data to the device from a portable data carrier which the user connects with the device.

Furthermore, it is known from the prior art to use separate so-called onboarding networks, sometimes referred as to rendezvous networks, which perform the onboarding task and which are separated from the data network into which the device shall be onboarded. Those onboarding networks are implemented e.g. through virtual network instances which usually share the same resources with the production network into which the device shall be onboarded.

The use of separate onboarding networks has several disadvantageous. Particularly, available resources for the production network are reduced as they are consumed by the onboarding network. Furthermore, onboarding networks are always present which is a potential security threat. Moreover, the static definition of onboarding networks lacks flexibility and, in case that an onboarding network is not available, an on-demand onboarding is not supported in the corresponding environment.

It is an object of the invention to enable an easy and flexible onboarding of a device into a data network.

This object is solved by the method according to claim 1. Preferred embodiments of the invention are defined in the dependent claims.

The method for onboarding a device into a data network is a computer-implemented method which comprises the following steps a) to d).

In step a), an onboarding management module of a mobile entity receives an onboarding job and configuration data for an onboarding of the device to be onboarded based on the onboarding job. Particularly, the onboarding job specifies the device by a corresponding identification and specifies the location of the device to be onboarded. The configuration data comprise information needed to configure the device for onboarding, e.g. certificates, hardware configurations, compliance anchors and so on. Corresponding configuration data are known for a person skilled in the art.

In step b), the mobile entity is positioned next to the device by the aid of a navigation module of the mobile entity, where the navigation module recognizes when the mobile entity is next to the device. To do so, the navigation module uses the location of the device to the onboarded which is usually included in the onboarding job.

In step c), a communication between the onboarding management module of the mobile entity and the device next to it is established via a communication module of the mobile entity. Preferably, this communication comprises a wireless communication link between the communication module and the device, e.g. via NFC (= Near Field Communication) and/or WLAN (WLAN = Wireless Local Area Network) and/or Bluetooth.

Finally, in step d), an onboarding process of the device into the data network is performed via the established communication based on the configuration data. Such an onboarding process is well-known from the prior art and, thus, will not be described in further detail.

The method according to the invention provides a flexible onboarding by using a mobile entity moving on-demand to the location of the device to be onboarded. The onboarding is performed by a communication established between the mobile entity and the device so that there is no need for a permanent presence of an onboarding network.

In a preferred embodiment of the method according to the invention, the onboarding job is transmitted in step a) from a remote onboarding orchestrator (i.e. a central entity storing the onboarding jobs of the devices to be onboarded) to the onboarding management module, whereupon the onboarding job is validated by a security module of the mobile entity, where in case of a successful validation, the mobile entity (particularly the onboarding management module) retrieves the configuration data from a storage. Otherwise, in case of an unsuccessful validation, the method of the invention will be terminated. The validation of the onboarding job can be performed by methods known per se from the prior art, e.g. by using corresponding authentication credentials which are validated by the security module. This embodiment of the invention provides an enhanced security for the onboarding process.

The storage from which the mobile entity retrieves the configuration data may be a local storage, i.e. a storage within the mobile entity. Alternatively, the storage may also be located remote from the mobile entity, i.e. in a backend system. If so, the mobile entity has access to the remote storage via a corresponding data link.

In another preferred variant of the invention, the mobile entity is an autonomously moving entity which moves autonomously in step b) to the device by the aid of the navigation module. In other words, the mobile entity is guided by the navigation module to the location of the device. This variant of the invention provides a high degree of automatization in the method for onboarding. Depending on the circumstances, the autonomously moving entity may be a drone or a ground vehicle.

Furthermore, in another embodiment of the invention, the mobile entity is a portable entity and the navigation module outputs navigation commands, e.g. via a user interface, for navigating in step b) a human user or robot carrying the mobile entity to the device. In this embodiment, the function concerning the movement of the mobile entity is not part of the mobile entity itself.

In another preferred embodiment, before performing the onboarding process in step d), the installation of the device at its location is validated by a security module of the mobile entity. Particularly, it is validated whether the device is at its correct position and/or whether the device is correctly connected to the data network and/or to a power supply. The onboarding process in step d) is only started upon a successful validation of the installation of the device.

In a preferred variant of the above embodiment, the installation of the device is captured for validation by one or more sensors of the mobile entity. Preferably, the one or more sensors comprise at least one camera for capturing one or more images at the location of the device. Preferably, at least one image at least partly contains the device. E.g., the sensors may detect whether the device is located at the correct position and/or is connected correctly to data ports and/or power plugs. If this is not the case, the onboarding process will not be started.

In another preferred embodiment, the onboarding process in step d) is performed by an onboarding infrastructure included in the mobile entity, where the onboarding infrastructure communicates with the device via the communication module. Hence, the mobile entity carries the complete functionality for enabling the onboarding of the device.

In another preferred embodiment, the onboarding process is performed by an onboarding infrastructure remote from the mobile entity, where the remote onboarding infrastructure communicates with the device via the data network and the communication module.

The method according to the invention may be used for onboarding into different data networks. In a preferred embodiment, the data network is an industrial data network within an industrial environment, e.g. within a factory or plant.

Besides the above method, the invention refers to a system for onboarding a device into a data network, where the system is configured to perform the method according to the invention or according to one ore more preferred embodiments thereof. I.e., the system comprises the mobile entity together with its modules as defined above.

In the following, embodiments of the invention will be described with respect to the accompanying drawings wherein
- Fig. 1: is a schematic illustration showing the components used in an embodiment according to the invention; and
- Fig. 2: is a diagram showing the steps performed by the embodiment of Fig. 1.

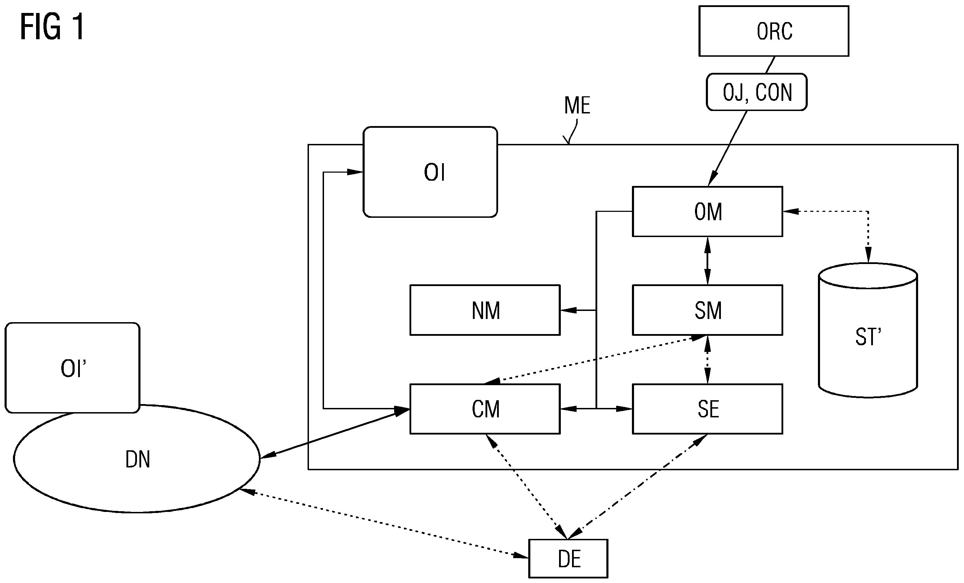

Fig. 1 shows the components used for onboarding a device into a data network according to an embodiment of the invention. Interaction paths between the components are indicated by double arrows in Fig. 1. The device to be onboarded into the data network is designated as DE. The data network into which the device DE is to be onboarded is designated as DN. In the embodiment described herein, the data network is an industrial communication network which is installed in an industrial environment, e.g. in an industrial factory or plant. The device DE refers to a new field device already positioned within the industrial environment but not yet connected to the data network DN.

The method described in the following onboards or integrates the device DE into the data network DN. To do so, a mobile entity ME is used. This mobile entity ME contains the computing and communication infrastructure to carry out the onboarding process for the device DE. In the embodiment described herein, the mobile entity ME is an autonomously moving vehicle, e.g. a drone (also named as UAV = Unmanned Aerial Vehicle) or an automatic guided vehicle (AGV).

The mobile entity ME comprises a navigation module NM which is responsible to navigate the mobile entity ME to the position where the device DE is located within the industrial environment. The mobile entity ME communicates with a so-called onboarding orchestrator ORC, which is a remote entity in the backend from which the mobile entity ME receives an onboarding job OJ specifying the device DE to be onboarded including the position of the device within the industrial environment.

The onboarding job OJ is processed by an onboarding management module OM within the mobile entity ME. The onboarding management module OM forwards the position of the device DE taken from the onboarding job OJ to the navigation module NM. Based on this position, the navigation module NM navigates the mobile entity ME to the location of the device DE in the industrial environment.

In an alternative embodiment, the mobile entity ME is carried by a human user or a robot, where the navigation module NM outputs navigation commands, e.g. via a user interface, for the human user or the robot so that the user or robot is guided to the position of the device DE via the navigation commands.

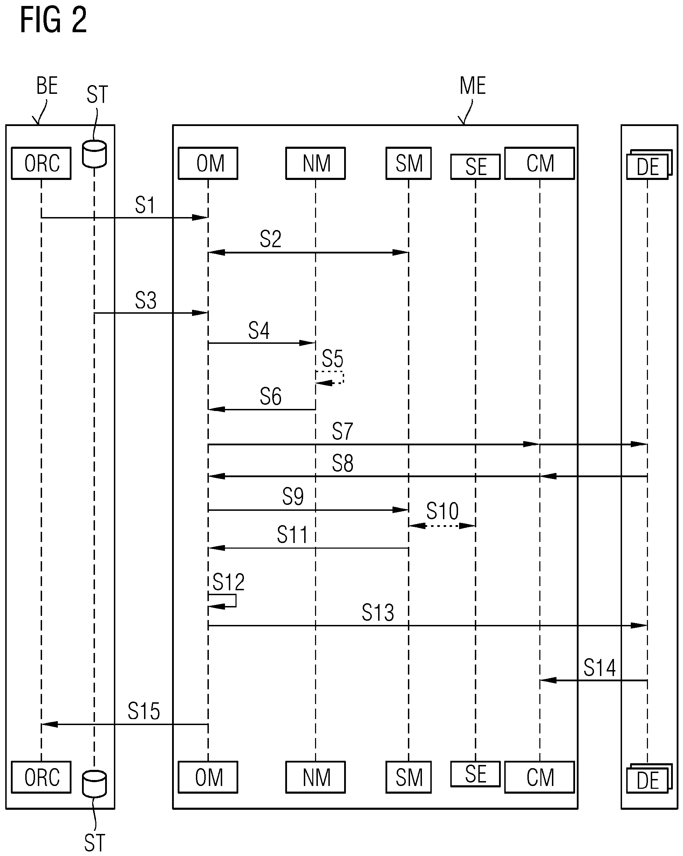

In the onboarding orchestrator ORC, the devices to be onboarded are selected and the assigned onboarding jobs are provided to corresponding mobile entities performing the onboarding. In the embodiment described herein, the onboarding management module OM retrieves corresponding configuration data CON for the onboarding job from a storage ST in the backend (see Fig. 2) after the onboarding job is successfully validated within the mobile entity ME as will be described below. The configuration data CON comprise the required device configuration settings of the device DE including configuration artefacts (e.g. device specific virtual network functions or agents).

In an alternative embodiment, after the onboarding job OJ is successfully validated, corresponding configuration data are retrieved from a local storage ST' within the mobile entity ME. I.e., the configuration data are stored beforehand in the local storage and need not be extracted from a remote storage.

The mobile entity ME further comprises a security module SM, which is also named as AAA module (Authentication Authorization Accounting). This module contains information for identifying the device to be onboarded so that the device can be validated. Furthermore, the security module SM comprises information for validating the onboarding job.

The mobile entity ME further comprises a communication module CM which is used for the communication of the device DE to be onboarded with the mobile entity ME. In the embodiment described herein, the communication between the communication module CM and the device DE is based on a wireless technology, e.g. NFC, WLAN, Bluetooth and so on.

Furthermore, the mobile entity ME comprises one or more sensors SE which are used for an installation validation of the device DE to be onboarded. In the embodiment described herein, the sensors SE comprise a camera which takes images of the device to be onboarded in order to check with the aid of the security module SM if the device is correctly installed, e.g., if it is at the correct position and/or if it is connected to the correct plugs and ports in the industrial environment. In case that such a validation is not successful, the onboarding process will be disabled or interrupted.

In the embodiment of Fig. 1, the onboarding of the device DE is performed by an onboarding infrastructure OI being integrated within the mobile entity ME. The onboarding infrastructure OI contains all required information and artefacts for running a defined onboarding process including device checks and validation. The onboarding infrastructure OI comprises components well-known from the prior art in order to perform the onboarding, particularly a registrar, a PKI infrastructure and the like. The onboarding infrastructure performs the onboarding based on a method according to the prior art, e.g. based on BRSKI zero-touch (BRSKI = Bootstrapping Remote Secure Key Infrastructure). For the onboarding process, the onboarding infrastructure OI communicates via the communication module CM with the device DE to be onboarded.

In an alternative embodiment, the onboarding infrastructure is not integrated in the mobile entity ME but located in the backend. Such a remote onboarding infrastructure is designated as OI' in Fig. 1. For onboarding, the remote onboarding infrastructure OI' communicates via the data network DN and the communication module CM with the device DE. To do so, the communication module has a wireless interface to the data network DN.

The onboarding management module OM as mentioned above is the main component for controlling the onboarding process within the mobile entity ME. It interacts with the security module SM, the navigation module NM, the sensors SE, the communication module CM as well as the modules hosted in the backend system (e.g. the onboarding orchestrator). The onboarding management module guarantees that the "onboarding description" is compiled into real virtual function instances and infrastructure correctly.

Fig. 2 shows the steps being performed by the system as described with respect to Fig. 1. As can be seen from Fig. 2, the onboarding orchestrator ORC is located in the backend BE. The backend BE also comprises a storage ST which stores the configuration data CON of the corresponding onboarding job OJ.

In step S1, the onboarding management module OM receives the onboarding job OJ specifying the device DE and its location from the onboarding orchestrator ORC. In step S2, the onboarding job is validated by the aid of the security module SM. Any known methods for validation based on corresponding authentication credentials may be used. In case of a successful validation, the onboarding management module OM retrieves in step S3 the corresponding configuration data CON for onboarding the device DE from the storage ST. Those configuration data comprise all required configuration settings including configuration artefacts.

In step S4, the position of the device DE included in the onboarding job OJ is sent from the onboarding management module OM to the navigation module NM of the mobile entity ME. In step S5, the mobile entity ME moves autonomously with the aid of the navigation module NM to the position where the device DE is located within the industrial environment. In step S6, the onboarding management module OM is notified by the navigation module NM that the mobile entity ME has arrived at the location of the device DE.

In step S7, a communication between the mobile entity ME (i.e. its onboarding management module OM) and the device DE is established via the communication module CM. This communication comprises a wireless communication path between the communication module CM and the device DE. In step S8, the hardware address is retrieved from the device DE by the onboarding management module OM. Thereafter, in step S9, the device DE is identified and its installation is validated by the security module SM. To do so, the device is captured by one or more sensors SE in step S10. In the embodiment described herein, the sensors SE comprise a camera taking images of the device DE. Those images are processed by the security module SM in order to evaluate whether the device is correctly installed as already described above. If so, in step S11, the information about the correct identification and validation of the device is sent by the security module SM to the onboarding management module OM. Only in case of a correct identification and validation, the onboarding process is started in step S12 via the onboarding management module OM.

The onboarding process uses the onboarding infrastructure OI included in the mobile entity ME but may also access an onboarding infrastructure OI' located in the backend BE. In the course of the onboarding, configuration artefacts (e.g. certificates, special hardware configurations, compliance anchors) are pushed to the device DE (step S13). Furthermore, the connectivity and the services to the data network DN are set up according to the configuration artefacts in step S14. To do so, the device DE communicates via the communication module CM with the data network DN. Finally, in step S15, the completed onboarding is acknowledged to the onboarding orchestrator ORC by the onboarding management module OM and the device communication in the data network DN is activated.

The invention as described in the foregoing has several advantages. Particularly, the solution of the invention offers are very flexible onboarding process independent of the existing communication infrastructure or the devices to the onboarded. The level of automation enabled with the onboarding process is higher than in the existing solutions.

The mobile entity used for onboarding can also be deployed at other sites and enables a wide range of onboarding services. The onboarding solution can be easily and cost-effectively adapted to the ongoing technical process. Furthermore, the production network (i.e. the network into which the device onboards) and the onboarding infrastructure can be separated. Moreover, the onboarding infrastructure is available on-demand.

## Claims

1. A method for onboarding a device (DE) into a data network (DN), comprising the following steps:
a) receiving by an onboarding management module (OM) of a mobile entity (ME) an onboarding job (OJ) and configuration data (CON) for an onboarding of the device (DE) based on the onboarding job (OJ);
b) positioning the mobile entity (ME) next to the device (DE) by the aid of a navigation module (NM) of the mobile entity (ME), where the navigation module (NM) recognizes when the mobile entity (ME) is next to the device (DE);
c) establishing a communication between the onboarding management module (OM) of the mobile entity (ME) and the device (DE) next to it via a communication module (CM) of the mobile entity (ME);
d) performing an onboarding process of the device (DE) into the data network (DN) via the established communication based on the configuration data (CON).

2. The method according to claim 1, wherein in step a) the onboarding job (OJ) is transmitted from a remote onboarding orchestrator (ORC) to the onboarding management module (OM), whereupon the onboarding job (OJ) is validated by a security module (SM) of the mobile entity (ME), where in case of a successful validation, the mobile entity (ME) retrieves the configuration data (CON) from a storage (ST, ST').

3. The method according to claim 2, wherein the storage (ST, ST') is located within the mobile entity (ME) or wherein the storage (ST, ST') is located remote from the mobile entity (ME) .

4. The method according to one of the preceding claims, wherein the mobile entity (ME) is an autonomously moving entity which moves autonomously in step b) to the device (DE) by the aid of the navigation module (NM).

5. The method according to claim 4, wherein the autonomously moving entity is a drone or a ground vehicle.

6. The method according to one of claims 1 to 3, wherein the mobile entity (ME) is a portable entity and the navigation module (NM) outputs navigation commands for navigating in step b) a human user or robot carrying the mobile entity (ME) to the device (DE).

7. The method according to one of the preceding claims, wherein, before performing the onboarding process in step d), the installation of the device (DE) at its location is validated by a security module (SM) of the mobile entity (ME), where the onboarding process in step d) is only started upon a successful validation of the installation of the device (DE) .

8. The method according to claim 7, wherein the installation of the device is captured for validation by one or more sensors (SE) of the mobile entity (ME).

9. The method according to claim 8, wherein the one or more sensors (SE) comprise at least one camera for capturing one or more images at the location of the device.

10. The method according to one of the preceding claims, wherein the communication established in step c) comprises a wireless communication link between the communication module (CM) and the device (DE).

11. The method according to one of the preceding claims, wherein the onboarding process in step d) is performed by an onboarding infrastructure (OI) included in the mobile entity (ME), where the onboarding infrastructure (OI) communicates with the device (DE) via the communication module (CM).

12. The method according to one of claims 1 to 10, wherein the onboarding process is performed by an onboarding infrastructure (OI') remote from the mobile entity (ME), where the remote onboarding infrastructure (OI') communicates with the device (DE) via the data network (DN) and the communication module (CM).

13. The method according to one of the preceding claims, wherein the data network (DN) is an industrial data network within an industrial environment.

14. A system for onboarding a device (DE) into a data network (DN), wherein the system is configured to perform the following steps:
a) receiving by an onboarding management module (OM) of a mobile entity (ME) an onboarding job (OJ) and configuration data (CON) for an onboarding of the device (DE) based on the onboarding job (OJ);
b) positioning the mobile entity (ME) next to the device (DE) by the aid of a navigation module (NM) of the mobile entity (ME), where the navigation module (NM) recognizes when the mobile entity (ME) is next to the device (DE);
c) establishing a communication between the onboarding management module (OM) of the mobile entity (ME) and the device (DE) next to it via a communication module (CM) of the mobile entity (ME);
d) performing an onboarding process of the device (DE) into the data network (DN) via the established communication based on the configuration data (CON).

15. The system according to claim 14, wherein the system is configured to perform a method according to one of claims 2 to 14.
